# EUROPÄISCHE PATENTSCHRIFT

(11) **EP 1 848 615 B1**
(45) Veröffentlichungstag und Bekanntmachung des Hinweises auf die Patenterteilung: **17.12.2008**
(21) Anmeldenummer: 05822044.3
(22) Anmeldetag: 30.12.2005
(51) Int. Cl.: B60R 21/26, B60R 21/16

(54) **AIRBAG SOWIE VERFAHREN ZUM HERSTELLEN EINES AIRBAGS**
AIRBAG AND METHOD FOR PRODUCTION OF AN AIRBAG
COUSSIN GONFLABLE ET PROCEDE DE FABRICATION D'UN COUSSIN GONFLABLE

(30) Priorität: 12.01.2005 DE 102005001598
(43) Veröffentlichungstag der Anmeldung: 31.10.2007
(73) Patentinhaber: AUTOLIV DEVELOPMENT AB, 447 83 Vargarda (SE)
(72) Erfinder: TAYLOR, Ian, Cheshire, SY14 7AA (GB); PUCCETTI, Yves, Congleton, Cheshire CW122JJ (GB); PHILLIPS, Marc, Allone, F-60000 Beauvais (FR)
(74) Vertreter: Stornebel, Kai
(86) Internationale Anmeldenummer: PCT/EP2005/014144
(87) Internationale Veröffentlichungsnummer: WO 2006/074814

(56) Entgegenhaltungen:
- EP-A- 1 310 409
- EP-A- 1 314 618
- EP-A- 1 364 839
- WO-A-03/039919
- WO-A-03/101788
- US-A1- 2001 019 201

## Beschreibung

Die Erfindung betrifft einen Airbag, insbesondere einen Airbag für den Kopf- und Schulterbereich, mit einem Verteilelement für Gas eines Gasgenerators und mit zumindest einer aufblasbaren Kammer, die zumindest zwei Lagen aufweisend in dem Airbag ausgebildet und mit dem Gas des Gasgenerators befüllbar ist. Die Gaskammer steht in strömungstechnischer Verbindung mit Austrittsöffnungen des Verteilelementes, das zumindest eine Aufnahmeeinrichtung für den Gasgenerator aufweist und an dem Airbag angenäht ist. Diese Art Airbags werden insbesondere im Dachbereich eines Kraftfahrzeuges angeordnet und dienen zum Schutz des Kopf- und Schulterbereiches bei einem Seitenaufprall und werden auch "inflatable curtains" genannt. Bei anderen Anwendungsfällen kann diese Art von Airbags auch in der Fahrzeugtür angeordnet sein und sich nach oben entfalten.

Die Erfindung betrifft ebenfalls ein Verfahren zum Herstellen eines Airbags, insbesondere eines Airbags für den Kopf- und Schulterbereich, mit einem Verteilelement für Gas eines Gasgenerators und mit zumindest einem aufblasbaren, mehrlagigen Kammer, die mit dem Gas des Gasgenerators befüllbar ist und in strömungstechnischer Verbindung mit Ausströmöffnungen des Verteilelementes steht, das zumindest eine Aufnahmeeinrichtung für den Gasgenerator aufweist und an dem Airbag angenäht ist.

Aus der DE 199 39 618 A1 ist ein Schutzpolster für den Kopf eines Fahrzeuginsassen bekannt, das Gas in Kammern gleichzeitig oder mit erwünschter Zeitverzögerung zwischen den Kammern einführen kann. Das Polster umfasst eine innenseitige Lage und eine karosserieseitige Lage, die übereinander angeordnet und zusammengenäht sind, um so freie Kammern zwischen den Lagen zu bilden. Ein zylindrisches Element ist zwischen den oberen Abschnitten der Lagen angeordnet. Gas, das durch ein rückwärtiges Ende des zylindrischen Elementes geliefert wird, wird in die Kammern durch Ausströmöffnungen geleitet. Das zylindrische Element sowie die beiden Lagen der Kammern werden mit einer gemeinsamen Naht verschlossen.

Ein weiteres Airbagsystem ist aus der WO 2004/050424 A2 bekannt. Auch hier werden die Kammern durch Gewebestücke gebildet, die durch eine Umfangsnaht zu einem Hohlkörper vernäht werden. Das Verteilelement ist in dem Airbag vollständig eingenäht.

Die gattungsgemäße WO003/039919 A beschreibt einen flexiblen Diffusor, der zur Beeinflussung einer Strömungscharakteristik eines Gasgenerators erreicht wird. Es ist ein Airbag mit einem Verteilelement für Gas eines Gasgenerators und mit zumindest einer aufblasbaren Kammer gezeigt, die zumindest zwei Lagen aufweisend in den Airbag ausgebildet und mit dem Gas des Gasgenerators befüllbar ist. Die Kammer steht in strömungstechnischer Verbindung mit Ausströmöffnungen des Verteilelementes, das zumindest eine Aufnahmeeinrichtung für den Gasgenerator aufweist und an dem Airbag angenäht ist. Das Verteilelement ist aus einem Grundmaterial ausgeschnitten und zu einen Hohlkörper vernäht.

Nachteilig an den Airbags gemäß dem Stand der Technik ist der Umstand, dass die Umfangsnaht der Kammern eine hohe Elastizität und damit eine hohe Leckrate zur Folge hat. Des Weiteren erfordert die Verlagerung des mit dem Gasgenerator zu verbindenden Einfüllstutzens von einer Außen- in eine Mittellage auch eine Umstellung der oberen Verbindungsnaht sowie des oberen Abschnitts der Lager des Airbags.

Aufgabe der vorliegenden Erfindung ist es, die Nachteile des Standes der Technik zu vermeiden und einen verbesserten Airbag und ein Verfahren zu dessen Herstellung bereitzustellen, mit dem die Anforderungen an einen Airbag während eines Unfalles besser erfüllt werden.

Erfindungsgemäß wird diese Aufgabe durch einen Airbag mit den Merkmalen des Anspruchs 1 sowie ein Verfahren mit den Merkmalen des Anspruchs 13 gelöst. Vorteilhafte Ausgestaltungen und Weiterbildungen der Erfindung sind in den Unteransprüchen beschrieben.

Der erfindungsgemäße Airbag sieht ein Verteilelement für Gas eines Gasgenerators sowie zumindest eine aufblasbare, mehrlagige Kammer vor. Die Kammern sind mit dem Gas des Gasgenerators befüllbar und stehen in strömungstechnischer Verbindung mit Ausströmöffnungen, die in dem Verteilelement, vorzugsweise in der Nähe der Kammern, vorgesehen sind. Das Verteilelement sieht weiterhin eine Aufnahmeeinrichtung für den Gasgenerator vor und ist an dem Airbag angenäht. Dabei ist es vorgesehen, dass das Verteilelement aus einem Grundmaterial ausgeschnitten und zu einem Hohlkörper vernäht ist. Das Verteilelement wird somit nach der "cut and sewn"-Methode hergestellt, bei der aus einem Rohling oder einem Zuschnitt, der aus einem Grundmaterial hergestellt wurde, durch Vernähen ein Hohlkörper hergestellt wird, durch den Gas aus einem Gasgenerator durchgeleitet wird. Dieses Verteilelement wird an die Kammer angenäht, wobei die Kammer einstückig gewoben ausgebildet ist. Die Kammer ist nach der "one piece woven"-Methode hergestellt, was eine erhöhte Haltbarkeit und Dichtigkeit der Kammern zur Folge hat, da die Gewebelagen nicht mehr mittels einer Naht verbunden werden, sondern die Verbindung über die Webtechnik erzeugt wird. Durch die dichteren Säume der einstückig gewobenen Kammer lassen sich längere Standzeiten des Airbags aufgrund der erhöhten Dichtigkeit realisieren.

In einer Weiterbildung der Erfindung ist es vorgesehen, dass das Verteilelement zumindest eine Verschlussnaht aufweist, die zwei Lagen des Verteilelementes verbindet. Ebenfalls sind zumindest zwei Verbindungsnähte vorhanden, die von der Verschlussnaht beabstandet sind und die jeweiligen Lagen der Kammern separat mit jeweils einer Lage des Verteilelementes verbinden. Anders als beim Stand der Technik ist somit das Verteilelement nicht vollständig innerhalb der Kammern des Airbags aufgenommen. Vielmehr wird die Verschlussnaht, die die übereinander gelegten Lagen des Verteilelementes miteinander verbindet, separat ausgeführt, so dass nur ein Teil des Verteilelementes, sinnvollerweise der Teil mit den Ausströmöffnungen, innerhalb der Kammern angeordnet ist bzw. von den Lagen des Kammermaterials abgedeckt ist. Dadurch kann der Airbag leicht an unterschiedliche Entfaltungscharakteristiken angepasst werden, die für jeden Fahrzeugtyp und gegebenenfalls in Abhängigkeit von dem Unfall bzw. Seitenaufprall verschieden sein können. Weiterhin kann die Lage des Einfüllstutzens beliebig gewählt werden, ohne die Verbindungsnaht zu den Lagen der Kammern zu beeinflussen.

Um eine möglichst schnelle und angepasste Entfaltung der Kammern und Verfüllung mit dem Gas des Gasgenerators zu erreichen, sind mehrere Kammern an dem Verteilelement angenäht, vorzugsweise dort, wo eine Schutzwirkung aufgebaut werden muss. Dabei kann es sinnvoll sein, dass Kammern separat voneinander an dem Verteilelement angenäht sind, so dass beispielsweise bei der B-Säule kein Kammervolumen zu befüllen ist, da dort keine Schutzfunktion benötigt wird. Um bei separaten Kammern, die nur durch das Verteilelement miteinander gekoppelt sind, eine ausreichende Stabilität des Airbags zu gewährleisten, ist zwischen den Kammern ein Verbindungsgewebe angeordnet, so dass der Airbag einen mehr oder weniger durchgehenden "Vorhang" ausbildet.

In einer Weiterbildung der Erfindung ist es vorgesehen, dass die Materialien, aus denen das Verteilelement und die Kammern hergestellt sind, physikalisch verschiedene Eigenschaften aufweisen, um den Airbag an die jeweils herrschenden Bedingungen optimal anpassen zu können. Im Bereich des Gasgenerators werden relativ hohe Temperaturen und hohe Drücke realisiert, die von dem Verteilelement aufgenommen werden müssen bzw. denen das Verteilelement standhalten muss. Dementsprechend ist das Material in diesem Bereich mit einer erhöhten Festigkeit und Temperaturbeständigkeit ausgestattet, beispielsweise durch eine besondere Webart, durch besondere Garne oder durch eine Beschichtung. In den entfernten Bereichen der Kammern wird weniger heißes Gas mit relativ geringem Druck vorhanden sein, so dass dort Gewebe mit geringerer Festigkeit oder Fadenstärke eingesetzt werden kann, so dass der Airbag insgesamt leichter und in dem gefalteten Zustand kleiner ausgebildet werden kann.

Um eine verbesserte Anpassung des Airbags an die Einsatzbedingungen zu gewährleisten, ist das Verteilelement mehrteilig ausgebildet, wobei auch hier unterschiedliche Materialien in Abhängigkeit von den herrschenden Betriebsbedingungen eingesetzt werden können. Ist beispielsweise der Gasgenerator zentral an dem Verteilelement angeordnet, ist es sinnvoll, den Zentralbereich mit einem sehr festen, temperaturbeständigen Material auszustatten, während die Randbereiche des Verteilelementes, die das Gas zu den Kammern durch die Ausströmöffnungen leiten, aus einem weniger stabilen, leichteren und preiswerteren Material gefertigt werden können. Alternativ kann der Gasgenerator auch an einem Ende des Verteilelementes angeschlossen und dieses einteilig ausgebildet sein.

Eine Ausgestaltungsform der Erfindung sieht vor, dass die Verbindungsnaht, mit der die Kammer an dem Verteilelement befestigt ist, sich über die gesamte Länge der Kammer erstreckt, so dass die Kammer, die aus einem einstückigen Gewebe besteht, das an einer Seite offen ist, um das Verteilelement aufzunehmen, zusammen mit dem angenähten Verteilelement einen im wesentlichen geschlossenen Hohlraum bildet, in den durch die Ausströmöffnungen des Verteilelementes Gas eingeleitet werden kann.

Das erfindungsgemäße Verfahren sieht vor, dass an das Verteilelement über je eine Verbindungsnaht je eine Lage der Kammer angenäht wird und das Verteilelement unter Bildung eines Hohlkörpers mit einer Verschlussnaht verschlossen wird. Dabei ist es möglich, dass das Verteilelement aus einem oder mehreren Zuschnitten hergestellt sein kann, die nachträglich miteinander vernäht werden. Auch ist es möglich, dass nur eine Verschlussnaht vorgesehen ist, die außerhalb der Kammern angeordnet ist, um den einmal gefalteten Zuschnitt des Verteilelementes zu einem Hohlkörper zu formen.

Alternativ zu einer einstückig gewebten Ausbildung der Kammern ist es möglich, dass nach Bildung der Verschlussnaht die Kammern mit einer Umfangsnaht geschlossen werden, also dass auch die Kammern nach der cut-and-sewn-Methode hergestellt werden.

Nachfolgend wird ein Ausführungsbeispiel der Erfindung anhand der Figuren näher erläutert. Es zeigen:
- Figur 1 -: eine Draufsicht auf einen erfindungsgemäßen Airbag;
- Figur 2 -: eine Schnittdarstellung gemäß Linie II - II; sowie
- Figur 3 -: eine Variante der Figur 2.

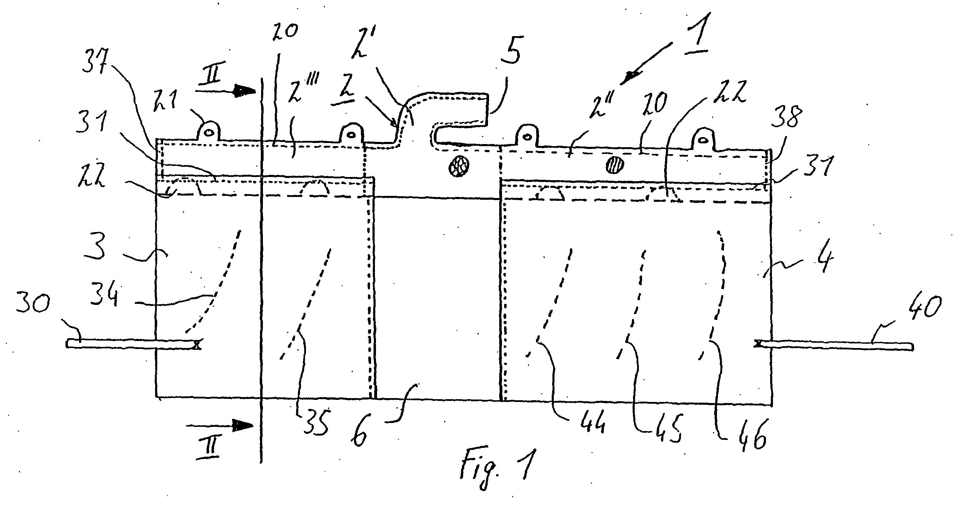

Figur 1 zeigt einen Airbag 1 mit einem Verteilelement 2, das aus drei Teilelementen 2', 2", 2"' aufgebaut ist. Die dargestellte Ausführungsform weist eine Aufnahmeeinrichtung 5 in Gestalt einer Einführöffnung für einen nicht dargestellten Gasgenerator, ungefähr in der Mitte des Verteilelementes 2, auf. An das mittlere Teilelement 2' sind zwei Seitenelemente 2", 2'" angenäht, die zusammen eine Verteillanze für das von dem Gasgenerator produzierte Gas bilden. Die beiden entgegengesetzten Enden der Verteillanze werden durch Nähte 37, 38 verschlossen. Im unteren Bereich der Teilelemente 2", 2"" sind Ausströmöffnungen 22 ausgebildet, durch die Gas in Kammern 3, 4 einströmen kann. In dem dargestellten Ausführungsbeispiel sind die Kammern 3, 4 separat in Gestalt von einstückig gewebten, zweilagigen Hohlkörpern ausgebildet, die über Verbindungsnähte 31 an dem jeweiligen Teilelement 2", 2"' angenäht sind.

An dem oberen, den Kammern 3, 4 gegenüberliegenden Ende des Verteilelementes 2 sind Anbindungspunkte 21 vorgesehen, mit denen der Airbag 1 an einem Dachrahmen oder einem sonstigen Karosserieteil eines Fahrzeuges befestigt werden kann. Für den Fall eines Seitenairbags, der sich vor die Fenster eines Fahrzeuges legt, sind an den Kammern 3, 4 Spannbänder 30, 40 ausgebildet, um eine Anbindung an Karosserieteile zu ermöglichen. Vorgesehen ist, dass die vordere Kammer 4 über das Spannband 40 an der A-Säule und die hintere Kammer 3 über das Spannband 30 an der C-Säule befestigt ist. Der nicht dargestellte Gasgenerator und damit auch die Aufnahmeeinrichtung 5 für den Gasgenerator sind im Bereich der B-Säule angeordnet. Sofern der Gasgenerator nicht an der B-Säule eines Fahrzeuges angeordnet ist, ist die Aufnahmeeinrichtung 5 an einem Endbereich des Verteilelementes 2 ausgebildet.

In dem dargestellten Ausführungsbeispiel sind die Kammern 3, 4 separat ausgebildet und durch ein Verbindungsgewebe 6, das einlagig und damit leicht und preiswert ist, verbunden. Durch das Verbindungsgewebe 6, das ebenfalls im Bereich der B-Säule und damit in einem nicht durch Kammern 3, 4 abzudeckenden Bereich angeordnet ist, ist es möglich, eine durchgängige Fläche durch die Kammern 3, 4 und das Verbindungsgewebe 6 abzudecken, so dass über die Spannbänder 30, 40 wirkungsvoll ein Ausklappen der Kammern 3, 4 bei einer zerstörten Seitenscheibe oder eine Eindringen von Gegenständen in Richtung auf den Insassen verhindert werden kann.

Innerhalb der Kammern 3, 4 sind Nähte bzw. Säume 34, 35, 44, 45, 46 ausgebildet, die die Kammern 3, 4 in einzelne, aufblasbare Bereiche unterteilen. Es ist möglich, dass die Nähte oder Säume 34, 35, 44, 45, 46 durchgängig ausgebildet sind, so dass voneinander abgetrennte Kompartements in den Kammern 3, 4 ausgebildet werden. Die Ausströmöffnungen 22 sind dabei so angeordnet, dass jede Kammer 3, 4 und gegebenenfalls jedes Kompartement schnellstmöglich befüllt werden kann.

In der Figur 1 ist angedeutet, dass die Gewebestruktur des mittleren Teilelementes 2' mit der Aufnahmeeinrichtung 5 für den Gasgenerator von der Gewebestruktur der seitlichen Teilelemente 2", 2"' verschieden ist. Dies ist durch den unterschiedlichen Winkelverlauf der Garne angedeutet, während in dem mittleren Teilelement 2' ein 45°-Verlauf der Garne gezeigt ist, ist ein rechtwinkliger Garnverlauf in den seitlichen Teilelementen 2", 2"' vorgesehen. Das mittlere Teilelement 2' und die seitlichen Teilelemente 2", 2'" können auch aus Geweben unterschiedlicher Garnstärke hergestellt sein.

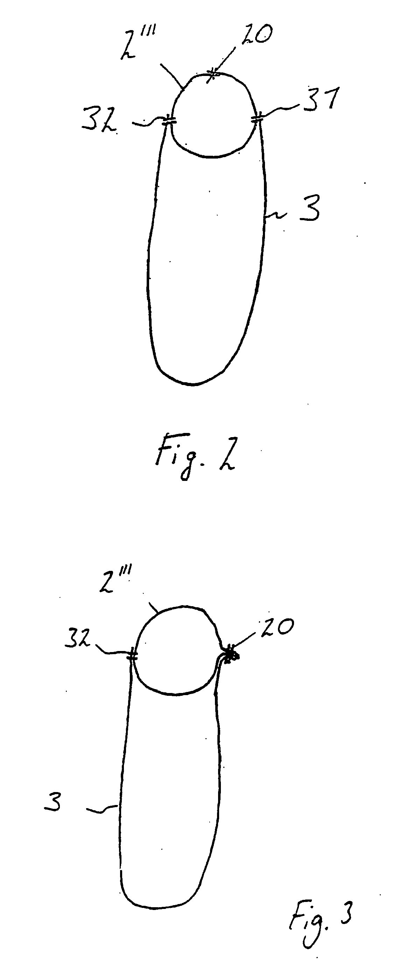

In der Figur 2 ist zu erkennen, dass die Kammer 3 aus einem einstückigen Gewebe ausgebildet ist, das an dem seitlichen Teilelement 2'" über Verbindungsnähte 31, 32 angenäht ist. Das Gewebe des seitlichen Teilelementes 2'" ist aus einem Grundgewebe ausgeschnitten und über eine Verschlussnaht 20 zu einem Hohlkörper verschlossen. Die Verbindungsnähte 31, 32 sind von der Verschlussnaht 20 beabstandet ausgeführt, so dass ein Teil des Verteilelementes 2 oberhalb der Kammern 3, 4 angeordnet ist. Lediglich der untere Abschnitt des Verteilelementes 2 mit den Ausströmöffnungen 22 ist von dem Gewebe der Kammern 3, 4 überdeckt, so dass sich zwei im Wesentlichen geschlossene Hohlkörper durch die Kammern 3, 4 sowie die Seitenabschnitte 2", 2'" des Verteilelementes 2 ausbilden. Statt einer einstückigen Ausbildung des seitlichen Teilelementes 2'" ist es möglich, dieses aus zwei Zuschnitten mit zwei Verschlussnähten zu bilden.

Eine Variante der Erfindung ist in der Figur 3 gezeigt, in der die Verschlussnaht 20 gleichzeitig eine der Verbindungsnähte ausbildet, so dass lediglich eine weitere Verbindungsnaht 32 notwendig ist, um dass Verteilelement beziehungsweise das Teilelement 2'" mit der Kammer 3 beziehungsweise dem entsprechenden Gewebezuschnitt zu verbinden. Bei einer zweiteiligen Ausgestaltung des Seitenelementes 2'" oder des Gasleitelementes können die beiden Verbindungsnähte 31, 32 gemäß der Figur 2 gleichzeitig die Verschlussnähte bilden, so dass Verbindungsnähte und Verschlussnähte zusammenfallen.

Eine Möglichkeit zur Herstellung eines erfindungsgemäßen Airbags 1 sieht vor, dass zunächst die Verbindungsnähte 31, 32 ausgeführt werden. Anschließend wird eine erste Verschlussnaht zum Verbinden zweier Lagen des Verteilelementes 2 bzw. des seitlichen Teilelementes 2'" gebildet. Anschließend wird gegebenenfalls die zweite Verschlussnaht des Verteilelementes 2 bzw. des seitlichen Teilelementes 2'" gebildet. Sofern die Kammer 3 ebenfalls nach dem cut-and-sewn-Verfahren hergestellt wurde, wird die Kammer 3 durch eine Umfangsnaht unter Bildung eines Hohlkörpers geschlossen. Sollte die Kammer 3 einstückig gewebt ausgebildet sein, entfällt der letzte Arbeitsschritt.

Alternativ ist es vorgesehen, dass zunächst nur eine Verbindungsnaht 32 ausgeführt wird und anschließend die zweite Verbindungsnaht als Verschlussnaht 20 ausgeführt wird, wie in der Figur 3 dargestellt, um den Airbag 1 fertigzustellen.
Durch den erfindungsgemäßen Airbag ist es möglich, dass die Kammern 3, 4 bei Verwendung eines einstückig gewebten Gewebes eine verbesserte Standzeit aufgrund verbesserter Dichtigkeit aufweisen. Aufgrund der geringeren Druckbelastung in den Kammern 3,4 im Verhältnis zu dem mittleren Teilelement 2' ist es möglich, unbeschichtetes Material für die Kammern 3, 4 zu verwenden, so dass eine leichtere und kostengünstigere Realisierung des Airbags 1 möglich ist. Das mittlere Teilelement 2' des Verteilelementes 2 kann mit einer Verstärkung versehen sein bzw. aus einem verstärkten Gewebe hergestellt sein, um den hohen Druck aus dem Gasgenerator sowie den hohen Temperaturen beim Entfalten des Airbags 1 standhalten zu können. Die seitlichen Teilelemente 2", 2'" sind an dem mittleren Teilelement 2' angenäht und vorzugsweise an den dem mittleren Teilelement 2' abgewandten Enden verschlossen. Die seitlichen Teilelemente 2", 2'" sammeln das erzeugte Gas und verteilen es auf die jeweiligen Kammern 3, 4. Durch die Größe der Ausströmöffnungen 22 sowie der Abmessungen der seitlichen Teilelemente 2", 2'" kann der Gasstrom gesteuert und damit die Belastung auf die Nähte in den Kammern 3, 4 bzw. in den darin ausgebildeten Kompartements reduziert werden. Die Kammern 3, 4 selbst können auf die jeweils gewünschte Entfaltungscharakteristik abgestimmt werden und können auch zu einem einstückigen Materialstück gewoben sein. Die vorliegende Erfindung ermöglicht eine Kombination von beschichteten und unbeschichteten Geweben, wobei eine Verstärkung nur in denjenigen Bereichen aufgebracht werden muss, in denen sie benötigt wird. Elastische Nähte können in den Bereichen hoher Belastung vorgesehen sein, während gewebte Säume oder Nähte für Bereiche mit geringeren Belastungen und verbessertem Standverhalten vorgesehen sein können. Der erfindungsgemäße Airbag 1 kann auf den jeweiligen Einsatzzweck abgestimmt werden, wodurch leichtere Textilien und dünnere Garne einsetzbar sind, was zu einer Reduzierung des Gewichtes und der Packgröße führt. Solch ein Airbag kann auch als Seitenairbag ausgebildet sein.

## Patentansprüche

1. Airbag (1), insbesondere Airbag für den Kopf- und Schulterbereich, mit einem Verteilelement (2; 2'; 2"; 2"') für das eines Gasgenerators und mit zumindest einer aufblasbaren Kammer (3,4), die zumindest zwei Lagen aufweisend in dem Airbag (1) ausgebildet und mit dem Gas des Gasgenerators befüllbar ist, die Kammer (3,4) steht in strömungstechnischer Verbindung mit Ausströmöffnungen (22) des Verteilelementes, das zumindest eine Aufnahmeeinrichtung (5) für den Gasgenerator aufweist und an dem Airbag angenäht ist, wobei das Verteilelement (2; 2', 2", 2"') aus einem Grundmaterial ausgeschnitten und zu einem Hohlkörper vernäht ist, wobei das Verteilelement (2; 2', 2", 2"') zumindest zwei Verbindungsnähte (31, 32) aufweist, die die Lagen der Kammern (3, 4) separat mit jeweils einer Lage des Verteilelementes (2; 2', 2", 2"') verbinden, **dadurch gekennzeichnet, dass** das Verteilelement (2; 2', 2", 2"') nur mit dem unteren, die Ausströmöffnungen (22) aufweisenden Abschnitt von der Kammer (3; 4) oder den Kammern (3, 4) überdeckt ist und der obere Bereich des Verteilelementes (2; 2', 2", 2"') aus den Kammern (3, 4) herausragt.

2. Airbag nach Anspruch 1, **dadurch gekennzeichnet, dass** die Kammern (3, 4) einstückig gewoben ausgebildet sind.

3. Airbag nach Anspruch 1 oder 2, **dadurch gekennzeichnet, dass** eine Verschlussnaht (20) die zwei Lagen des Verteilelementes (2; 2', 2", 2"') verbindet und die Verbindungsnähte (31, 32) von der Verschlussnaht (20) beabstandet sind.

4. Airbag nach einem der voranstehenden Ansprüche, **dadurch gekennzeichnet, dass** mehrere Kammern (3, 4) an dem Verteilelement (2; 2', 2", 2"') angenäht sind.

5. Airbag nach Anspruch 4, **dadurch gekennzeichnet, dass** die Kammern (3, 4) separat voneinander an dem Verteilelement (2; 2', 2", 2"') angenäht sind.

6. Airbag nach Anspruch 4 oder 5, **dadurch gekennzeichnet, dass** zwischen den Kammern (3, 4) ein Verbindungsgewebe (6) angeordnet ist.

7. Airbag nach einem der voranstehenden Ansprüche, **dadurch gekennzeichnet, dass** das Verteilelement (2; 2', 2", 2"') und die Kammern (3, 4) aus Materialien mit unterschiedlichen physikalischen Eigenschaften hergestellt sind.

8. Airbag nach einem der voranstehenden Ansprüche, **dadurch gekennzeichnet, dass** das Verteilelement (2; 2', 2", 2"') mehrteilig ausgebildet ist.

9. Airbag nach Anspruch 7, **dadurch gekennzeichnet, dass** die Teile des Verteilelementes (2; 2', 2", 2"') aus Materialien mit unterschiedlichen physikalischen Eigenschaften hergestellt sind.

10. Airbag nach einem der voranstehenden Ansprüche, **dadurch gekennzeichnet, dass** die Verbindungsnaht (31, 32) sich über die gesamte Länge der Kammer (3, 4) erstreckt.

11. Airbag nach einem der voranstehenden Ansprüche, **dadurch gekennzeichnet, dass** das Verteilelement (2; 2', 2", 2"') im Bereich der Aufnahmeeinrichtung (5) ein Material höherer Temperaturbeständigkeit und/oder Reißfestigkeit als im Bereich der Ausströmöffnungen (22) aufweist.

12. Airbag nach einem der voranstehenden Ansprüche, **dadurch gekennzeichnet, dass** an dem Verteilelement (2; 2', 2", 2"') Laschen (21) zur Befestigung des Airbags (1) innerhalb des Fahrzeuges vorgesehen sind.

13. Verfahren zum Herstellen eines Airbags (1), insbesondere Airbag für den Kopf- und Schulterbereich, mit einem Verteilelement (2; 2'; 2"; 2"') für Gas eines Gasgenerators und mit zumindest einer aufblasbaren, mehrlagigen Kammer (3,4), die mit dem Gas des Gasgenerators befüllbar ist und in strömungstechnischer Verbindung mit Ausströmöffnungen (22) des Verteilelementes steht (2; 2'; 2"; 2"'), das zumindest eine Aufnahmeeinrichtung (5) für den Gasgenerator aufweist und an dem Airbag (1) angenäht ist, wobei an das Verteilelement (2; 2', 2", 2"') über je eine Verbindungsnaht (31, 32) je eine Lage der Kammer (3, 4) angenäht wird und das Verteilelement (2; 2', 2", 2"') unter Bildung eines Hohlkörpers mit einer Verschlussnaht (20) verschlossen wird, **dadurch gekennzeichnet, dass** das Verteilelement (2; 2'; 2"; 2"') mit den Kammern (3, 4) so angenäht ist, dass der untere, die Ausströmöffnungen (22) aufweisenden Abschnitt von den Kammern (3, 4) überdeckt ist und der obere Bereich des Verteilelements (2; 2'; 2"; 2"') aus den Kammern (3, 4) herausragt.

14. Verfahren nach Anspruch 13, **dadurch gekennzeichnet, dass** die Verbindungsnähte (31, 32) von der Verschlussnaht (20) beabstandet ausgeführt werden.

15. Verfahren nach Anspruch 13 oder 14, **dadurch gekennzeichnet, dass** nach der Bildung der Verschlussnaht (20) die Kammer oder Kammern (3, 4) mit einer Umfangsnaht geschlossen werden.

## Claims

1. Airbag (1), in particular airbag for the head and shoulder region, comprising a distribution element (2; 2', 2", 2"') for gas of a gas generator and comprising at least one inflatable chamber (3, 4), which is configured having at least two layers in the airbag (1) and can be filled with the gas of the gas generator, the chamber (3, 4) is in flow connection with outflow openings (22) of the distribution element, which has at least one receiving device (5) for the gas generator and is sewn on the airbag, wherein the distribution element (2; 2', 2", 2"'), is cut out from a base material and is sewn to form a hollow body, wherein the distribution element (2; 2', 2", 2"') has at least two connection seams (31, 32), which connect the layers of the chambers (3, 4) separately to a respective layer of the distribution element (2; 2', 2", 2"'), **characterised in that** the distribution element (2; 2', 2", 2"') is only covered in the lower portion having the outflow openings (22) by the chamber (3; 4) or the chambers (3, 4) and the upper region of the distribution element (2; 2', 2", 2"') projects from the chambers (3, 4).

2. Airbag according to claim 1, **characterised in that** the chambers (3, 4) are configured so as to be woven in one piece.

3. Airbag according to claim 1 or 2, **characterised in that** a closing seam (20) connects the two layers of the distribution element (2; 2', 2", 2"') and the connection seams (31, 32) are spaced apart from the closing seam (20).

4. Airbag according to any one of the preceding claims, **characterised in that** a plurality of chambers (3, 4) are sewn to the distribution element (2; 2', 2", 2"').

5. Airbag according to claim 4, **characterised in that** the chambers (3, 4) are sewn separately from one another on the distribution element (2; 2', 2", 2"').

6. Airbag according to claim 4 or 5, **characterised in that** a connecting woven fabric (6) is arranged between the chambers (3, 4).

7. Airbag according to any one of the preceding claims, **characterised in that** the distribution element (2; 2', 2", 2"') and the chambers (3, 4) are produced from materials with different physical properties.

8. Airbag according to any one of the preceding claims, **characterised in that** the distribution element (2; 2', 2", 2"') is multi-part.

9. Airbag according to claim 7, **characterised in that** the parts of the distribution element (2; 2', 2", 2"') are produced from materials with different physical properties.

10. Airbag according to any one of the preceding claims, **characterised in that** the connection seam (31, 32) extends over the entire length of the chamber (3, 4).

11. Airbag according to any one of the preceding claims, **characterised in that** the distribution element (2; 2', 2", 2"') in the region of the receiving device (5) has a material with higher temperature resistance and/or tensile strength than in the region of the outflow openings (22).

12. Airbag according to any one of the preceding claims, **characterised in that** tabs (21) are provided on the distribution element (2; 2', 2", 2"') for fastening the airbag (1) inside the vehicle.

13. Method for producing an airbag (1), in particular an airbag for the head and shoulder region, comprising a distribution element (2; 2', 2", 2"') for gas of a gas generator and comprising at least one inflatable, multi-layer chamber (3, 4), which can be filled with the gas of the gas generator and is in flow connection with the outflow openings (22) of the distribution element (2; 2', 2", 2"') which has at least one receiving device (5) for the gas generator and is sewn to the airbag (1), wherein a layer of the chamber (3, 4) is sewn in each case to the distribution element (2; 2', 2", 2"') by means of a connection seam (31, 32) in each case and the distribution element (2; 2', 2", 2"') is closed with a closing seam (20) with the formation of a hollow body, **characterised in that** the distribution element (2; 2', 2", 2"') is sewn to the chambers (3, 4) in such a way that the lower portion having the outflow openings (22) is covered by the chambers (3, 4) and the upper region of the distribution element (2; 2', 2", 2"') projects from the chambers (3, 4).

14. Method according to claim 13, **characterised in that** the connection seams (31, 32) are spaced apart from the closing seam (20).

15. Method according to claim 13 or 14, **characterised in that** the chamber or chambers (3, 4) are closed with a peripheral seam after the formation of the closing seam (20).

## Revendications

1. Coussin gonflable (1), en particulier coussin gonflable pour la zone de la tête et des épaules, comprenant un élément de distribution (2 ; 2' ; 2" ; 2"') pour le gaz d'un générateur de gaz, et au moins une chambre (3, 4) gonflable, chambre qui est formée d'au moins deux couches dans le coussin gonflable (1) et qui est remplissable avec le gaz du générateur de gaz, la chambre (3, 4) étant en liaison fluidique avec des orifices de sortie (22) de l'élément de distribution, lequel présente au moins un dispositif de réception (5) pour le générateur de gaz et est cousu au coussin gonflable, l'élément de distribution (2 ; 2' ; 2" ; 2"') étant découpé dans un matériau de base et cousu en un corps creux, et présentant au moins deux coutures de liaison (31, 32) qui relient les couches des chambres (3, 4) séparément chacune avec une couche de l'élément de distribution (2 ; 2' ; 2" ; 2"'), **caractérisé en ce que** l'élément de distribution (2 ; 2' ; 2" ; 2"') n'est recouvert par la chambre (3 ; 4) ou les chambres (3, 4), qu'en sa partie inférieure comprenant les orifices de sortie (22), et **en ce que** la région supérieure de l'élément de distribution (2 ; 2' ; 2" ; 2"') dépasse hors des chambres (3, 4).

2. Coussin gonflable selon la revendication 1, **caractérisé en ce que** les chambres (3, 4) sont formées en une seule pièce tissée.

3. Coussin gonflable selon la revendication 1 ou 2, **caractérisé en ce qu'**une couture de fermeture (20) relie les deux couches de l'élément de distribution (2 ; 2' ; 2" ; 2"') et **en ce que** les coutures de liaison (31, 32) sont espacées de la couture de fermeture (20).

4. Coussin gonflable selon l'une des revendications précédentes, **caractérisé en ce que** plusieurs chambres (3, 4) sont cousues à l'élément de distribution (2 ; 2' ; 2" ; 2"').

5. Coussin gonflable selon la revendication 4, **caractérisé en ce que** les chambres (3, 4) sont cousues séparément l'une de l'autre à l'élément de distribution (2 ; 2' ; 2" ; 2"').

6. Coussin gonflable selon la revendication 4 ou 5, **caractérisé en ce qu'**un tissu de liaison (6) est agencé entre les chambres (3, 4).

7. Coussin gonflable selon l'une des revendications précédentes, **caractérisé en ce que** l'élément de distribution (2 ; 2' ; 2" ; 2"') et les chambres (3, 4) sont fabriqués à partir de matériaux aux propriétés physiques différentes.

8. Coussin gonflable selon l'une des revendications précédentes, **caractérisé en ce que** l'élément de distribution (2 ; 2' ; 2" ; 2"') est formé en plusieurs parties.

9. Coussin gonflable selon la revendication 7, **caractérisé en ce que** les parties de l'élément de distribution (2 ; 2' ; 2" ; 2"') sont fabriquées à partir de matériaux aux propriétés physiques différentes.

10. Coussin gonflable selon l'une des revendications précédentes, **caractérisé en ce que** la couture de liaison (31, 32) s'étend sur toute la longueur des chambres (3, 4).

11. Coussin gonflable selon l'une des revendications précédentes, **caractérisé en ce que** l'élément de distribution (2 ; 2' ; 2" ; 2"') présente, dans la zone du dispositif de réception (5), un matériau de tenue à la température et/ou de résistance au déchirement plus grande que dans la zone des orifices de sortie (22).

12. Coussin gonflable selon l'une des revendications précédentes, **caractérisé en ce que** des pattes (21) sont prévues sur l'élément de distribution (2 ; 2' ; 2" ; 2"') pour la fixation du coussin gonflable (1) à l'intérieur du véhicule.

13. Procédé de fabrication d'un coussin gonflable (1), en particulier d'un coussin gonflable pour la zone de la tête et des épaules, comprenant un élément de distribution (2 ; 2' ; 2" ; 2"') pour le gaz d'un générateur de gaz, et au moins une chambre (3, 4) gonflable et en plusieurs couches, qui est remplissable avec le gaz du générateur de gaz et qui est en liaison fluidique avec des orifices de sortie (22) de l'élément de distribution (2 ; 2' ; 2" ; 2"'), lequel présente au moins un dispositif de réception (5) pour le générateur de gaz et est cousu au coussin gonflable (1), coussin gonflable dans lequel chacune des couches de la chambre (3, 4) est cousue à l'élément de distribution (2 ; 2' ; 2" ; 2"') par l'intermédiaire d'une couture de liaison respective (31, 32), et dans lequel l'élément de distribution (2 ; 2' ; 2" ; 2"') est fermé par une couture de fermeture (20) formant ainsi un corps creux, **caractérisé en ce que** l'élément de distribution (2 ; 2' ; 2" ; 2"') est cousu avec les chambres (3, 4) de façon que la partie inférieure comprenant les orifices de sortie (22) soit recouverte par les chambres (3, 4), et **en ce que** la zone supérieure de l'élément de distribution (2 ; 2' ; 2" ; 2"') dépasse des chambres (3, 4).

14. Procédé selon la revendication 13, **caractérisé en ce que** les coutures de liaison (31, 32) sont réalisées à distance de la couture de fermeture (20).

15. Procédé selon la revendication 13 ou 14, **caractérisé en ce qu'**après la formation de la couture de fermeture (20), la chambre ou les chambres (3, 4) sont fermées avec une couture périphérique.
